# EUROPEAN PATENT SPECIFICATION

(11) **EP 0 750 403 B1**
(45) Date of publication and mention of the grant of the patent: **16.10.2002**
(21) Application number: 96304456.5
(22) Date of filing: 14.06.1996
(51) Int. Cl.: H04B 1/50, H04B 1/10

(54) **Radio transmitter/receiver**
Funksondeempfänger
Radio émetteur-récepteur

(30) Priority: 20.06.1995 JP 15317095
(43) Date of publication of application: 27.12.1996
(73) Proprietor: NEC Corporation, Minato-ku, Tokyo 108-8001 (JP)
(72) Inventor: Miyazaki, Shinichi, c/o NEC Saitama Ltd., Kamikawamachi, Kodama-gun, Saitama (JP)
(74) Representative: Abnett, Richard Charles

(56) References cited:
- WO-A-95/15621

## Description

The present invention relates to a radio transmitter/receiver which performs transmitting and receiving operations simultaneously, more particularly to a radio transmitter/receiver which comprises receiving local oscillation means for producing a local oscillation signal, which constitutes a phase lock loop (PLL), including a dividing circuit to divide the local oscillation signal.

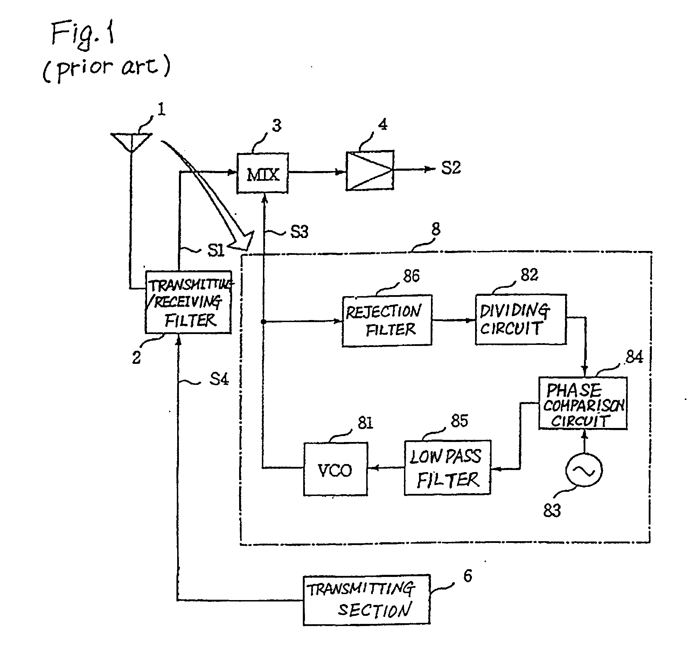

Fig. 1 is a block diagram showing the constitution of an example of a known radio transmitter/receiver. It is noted that a portable (mobile) telephone is an example of such a radio transmitter/receiver.

Here, a received signal S1 received through an antenna 1 and a transmitting/receiving filter 2 is mixed with a local oscillation signal S3 in a frequency mixing circuit 3, and is converted into an intermediate frequency signal. Thereafter, the intermediate frequency signal is amplified in an intermediate frequency circuit 4, and is output as the intermediate frequency signal S2. It is noted that the local oscillation signal S3 is produced by a receiving local oscillation means 8.

On the other hand, a transmitted signal S4 which is output from a transmitting section 6 during talking is transmitted through the transmitting/receiving filter 2 and the antenna 1. In standby periods, only reception is performed. In talking periods, reception and transmission operations are performed simultaneously.

The receiving local oscillation means 8 comprises a phase lock loop which is composed of a voltage controlled oscillation circuit (VCO) 81 outputting the local oscillation signal S3, a dividing circuit 82 dividing the local oscillation signal S3, a reference frequency oscillation circuit 83 producing a reference signal, a phase comparison circuit 84 detecting the phase difference between the output of the dividing circuit and the reference signal, a low pass filter 85 reducing high frequency components, and a rejection filter 86.

When a high level transmitted signal interferes with the circuit on the receiving side during talking, a reduction in reception sensitivity and incorrect operation of the receiving local oscillation means can be caused, so that problems are caused with the reception function. To reduce the occurrence of such problems, the receiving side is shielded by the use of a metal plate having a shielding effect. Also to help prevent incorrect operation of the receiving local oscillation means 8, particularly, the rejection filter 86 is connected with an input side of the dividing circuit 82.

Specifically, when the transmitted signal interferes with the receiving local oscillation means 8 due to spatial propagation, and it is input to the dividing circuit 82 with only a small difference in level from the local oscillation signal S3, the dividing circuit 82 may perform incorrect operation, so that a normal local oscillation signal S3 is not produced. Particularly in equipment in which an antenna is fitted directly to its body, the high level transmitted signal interferes therewith. For this reason, the receiving local oscillation means 8 is designed such that, by connecting the rejection filter 86 to the input side of the dividing circuit 82, the interfering transmitted signal is fully attenuated compared with the local oscillation signal S3.

The rejection filter 86 is constituted such that the filter 86 possesses the characteristic of being able to attenuate the transmitted signal due to low impedance at the frequency of the transmitted signal. Furthermore, because the frequency of the local oscillation signal S3 is close to that of the transmitted signal S4, the local oscillation signal S3 to be passed through it is attenuated.

The foregoing known radio transmitter/receiver is constructed such that the dividing circuit has the rejection filter connected to its input side to attenuate the interfering transmitted signal, in order to keep the dividing circuit from performing incorrect operation, with the transmitted signal interfering into the receiving local oscillation means formed of the PLL including the dividing circuit.

WO 9 515 621 discloses a prior art transceiver wherein filters are provided in the PLL circuits to solve the problem of stray signals.

This rejection filter, however, undesirably attenuates the local oscillation signal which has to be passed through it, whereby the level of the local oscillation signal which is input to the dividing circuit is reduced. Thus, the operation of the receiving local oscillation means is unstable. If the level of the local oscillation signal is increased, to compensate for the loss caused by the rejection filter then the receiving local oscillation means normally operates in the standby period as well. The power consumption of the equipment increases. Particularly, for a portable telephone which operates with a cell or battery of small capacity, the time for which it can operate is short.

The invention in its various aspects is defined in the independent claims below, to which reference should now be made. Advantageous features are set forth in the appendant claims.

The invention will now be described in more detail, by way of example, with reference to the drawings, in which:
Fig. 1 (described above) is a block diagram showing an example of a known radio transmitter/receiver;
Fig. 2 is a block diagram showing an embodiment of a radio transmitter/receiver according to the present invention; and
Fig. 3 is a diagram showing the characteristic of the rejection filter shown in Fig. 2.

An embodiment of a radio transmitting/receiver according to the present invention will now be described with reference to the accompanying drawings.

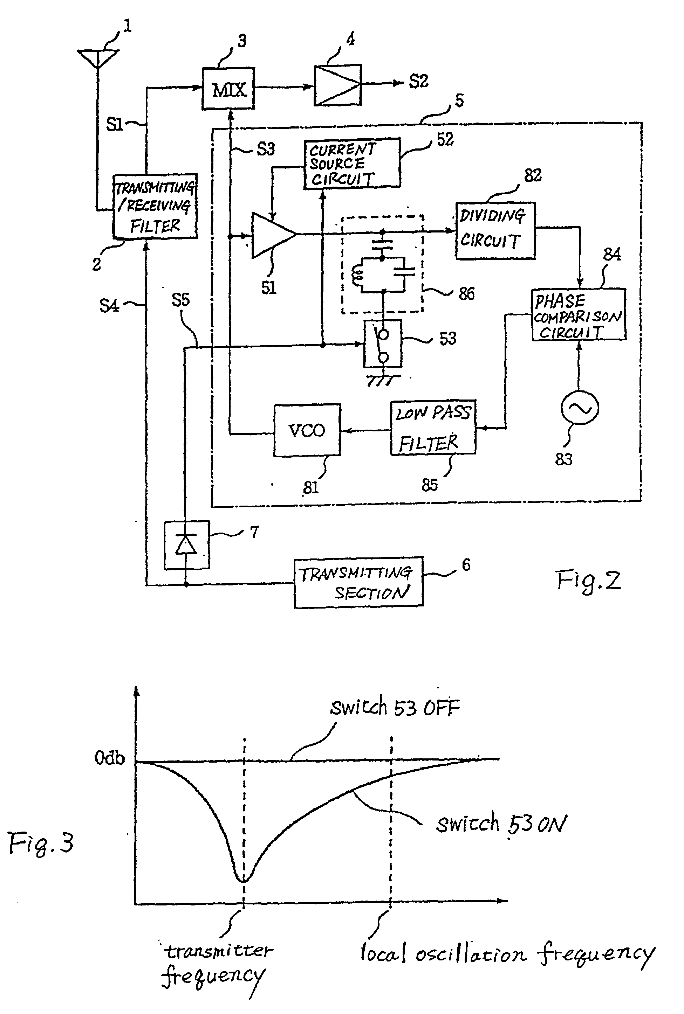

Fig. 2 is a block diagram showing an embodiment of a radio transmitter/receiver according to the present invention. Referring now to Fig. 2, a receiving signal S1 received through an antenna 1 and a transmitting/receiving filter 2 is mixed with a local oscillation signal S3 in a frequency mixing circuit 3, and is converted to an intermediate frequency signal. Thereafter, the intermediate frequency signal is amplified in an intermediate frequency amplifying circuit 4, and is output as an intermediate frequency signal S2. It is noted that the local oscillation signal S3 is produced by receiving local oscillation means 5.

On the other hand, a transmitted signal S4 which is output from a transmitting section 6 during talking is transmitted through the transmitting/receiving filter 2 and the antenna 1. Furthermore, to detect the transmitted signal S4, a transmitting detection circuit 7 is connected to the output of the transmitting section 6. When the transmitted signal S4 is output from the transmitting section 6, the transmitting detection circuit 7 detects the transmitted signal S4 and a transmitting detection signal S5 is output from the transmitting detection circuit 7.

Next, the receiving local oscillation means 5 will be described.

Receiving local oscillation means 5 comprises a voltage controlled oscillation circuit (VCO) 81 which outputs the local oscillation signal S3, a dividing circuit 82 which divides the local oscillation signal S3, a reference frequency oscillation circuit 83 which produces a reference signal, a phase comparison circuit 84 which detects the phase difference between the output of the dividing circuit and the reference signal, a lowpass filter 85 which removes high frequency components, and a rejection filter 86. These parts are the same as those of the known radio transmitter/receiver. The receiving local oscillation means 5 further comprises an amplifying circuit 51 which amplifies the local oscillation signal S3 before the signal S3 is applied to the dividing circuit 82, a current source circuit 52 which controls the power source current to be supplied to the amplifying circuit 51 in accordance with the transmitting detection signal S5, and a switch 53 which grounds the rejection filter 86 in accordance with the transmitting detection signal S5.

The current source circuit 52 increases the supply current to the amplifying circuit 51 when the current source circuit 52 receives the transmitting detection signal S5 from transmitting detection circuit 7, that is, the transmitted signal S4 is transmitted from the transmitting section 6 to the transmitting/receiving filter 2. The amplifying circuit 51 increases its gain as the supply current from the current source circuit 52 increases, and increases the level of the local oscillation signal which is output to the dividing circuit 82.

Furthermore, the switch 53 is changed over to the ON state only when the switch 53 receives the transmitting detection signal S5, that is, when the transmitted signal S4 is transmitted. With the ON state of the switch 53, one terminal of the rejection filter 86 is grounded so that the rejection filter 86 exhibits its function. The rejection filter 86 is composed of, for example, an LC resonance circuit, and the rejection circuit 86 is constituted so that the rejection circuit 86 exhibits a low impedance for the frequency of the transmitted signal to attenuate the transmitted signal.

Now, if the switch 53 is in the OFF state, the rejection filter 86 does not function. The signal passing through the rejection filter 86 is not attenuated. When the switch 53 is in the ON state, the rejection filter 86 functions, so that the interfering transmitted oscillation signal is also attenuated. However, at this time, the gain is increased by the amplifying circuit 51 so that the pass loss of the local oscillation signal is compensated.

Thus, only when the transmitted signal is being transmitted, is the rejection filter 86 made to function, and at the same time the current which is supplied to the amplifying circuit 51 from the current source circuit 52 is increased so that the gain of the amplifying circuit 51 is increased. Thus, the transmitted signal interfering into the receiving local oscillation means 5, and the pass loss of the local oscillation signal are compensated, so that the dividing circuit 82 operates stably. Furthermore, since the current supplied to the amplifying circuit 51 is increased only when the transmitted signal is being transmitted, and the amplifying circuit 51 normally operates with as little current as possible, the power consumed can be suppressed.

As described above, in a radio transmitter/receiver which comprises receiving local oscillation means for producing a local oscillation signal by constituting a phase lock loop (PLL) including a dividing circuit which divides the local oscillation signal, an amplifying circuit amplifying the local oscillation signal and a rejection filter attenuating an interfering transmitted signal, are connected to the input side of the dividing circuit. Only when the transmitted signal is being transmitted, is the rejection filter operated and at the same time the current supplied to the amplifying circuit from a current source circuit is increased, thereby increasing the gain of the amplifying circuit, whereby the pass loss of the local oscillation signal is compensated by the rejection filter and the transmitted signal is attenuated. Thus, the dividing circuit does not operate incorrectly due to the invasion of the transmitted signal, and the dividing circuit operates stably. Furthermore, since the current to the amplifying circuit is increased only when the signal is being transmitted, and the amplifying circuit operates with the current as little as possible, the power consumed can be suppressed.

It is to be understood that variations and modifications of radio transmitter/receiver disclosed herein will be evident to those skilled in the art.

## Claims

1. A radio transmitter/receiver comprising:
transmitting means (6) for outputting a transmitted signal during talking;
frequency mixing means (3) for normally receiving a received signal (S1) and a local oscillation signal (S3) to output an intermediate frequency signal (S2);
receiving local oscillation means (5) for producing the local oscillation signal (S3), the receiving local oscillation means including a dividing circuit (82) for dividing the local oscillation signal and constituting a phase lock loop (PLL);
transmitting detection means (7) for detecting the transmitted signal to provide a detection signal (S5), the transmitting detection means being coupled to the output of the transmitting means;
amplifying means (51) for amplifying the local oscillation signal (S3) upon the receipt of the detection signal (S5), the amplifying means (51) being coupled in the input path to the dividing circuit (82); and
filter means (86) for functioning upon the receipt of the detection signal (S5), and for attenuating the frequency component of the transmitted signal interfering with the dividing circuit (82), the filter means (86) being coupled in the input path to the dividing circuit (82).

2. A radio transmitter/receiver according to claim 1, wherein the amplifying means comprises;
an amplifying circuit (51) which changes its gain in accordance with a source current; and
a current source circuit (52) which increases the source current supplied to the amplifying circuit upon the receipt of the detection signal (S5).

3. A radio transmitter/receiver according to claim 1, wherein the filter means (86) comprises a rejection filter which exhibits a relatively low impedance for the frequency of the transmitting signal; and a switch (53) which operates upon the receipt of the detection signal (S5) to make the rejection filter (86) function, the switch being disposed between the rejection filter and ground.

4. A radio transmitter/receiver comprising:
transmitting means (6) for outputting a transmitted signal during talking;
frequency mixing means (3) for normally receiving a received signal (S1) and a local oscillation signal (S3) to output an intermediate frequency signal (S2);
receiving local oscillation means (5) for producing the local oscillation signal (S3), the receiving local oscillation means including a dividing circuit (82) for dividing the local oscillation signal and constituting a phase lock loop (PLL);
transmitting detection means (7) for detecting the transmitted signal to provide a detection signal (S5), the transmitting detection means being coupled to the output of the transmitting means; and
amplifying means (51) for amplifying the local oscillation signal (S3) upon the receipt of the detection signal (S5), the amplifying means (51) being coupled in the input path to the dividing circuit (82).

5. A radio transmitter/receiver comprising:
transmitting means (6) for outputting a transmitted signal during talking;
frequency mixing means (3) for normally receiving a received signal (S1) and a local oscillation signal (S3) to output an intermediate frequency signal (S2);
receiving local oscillation means (5) for producing the local oscillation signal (S3), the receiving local oscillation means including a dividing circuit (82) for dividing the local oscillation signal and constituting a phase lock loop (PLL);
transmitting detection means (7) for detecting the transmitted signal to provide a detection signal (S5), the transmitting detection means being coupled to the output of the transmitting means; and
filter means (86) for functioning upon the receipt of the -detection signal (S5), and for attenuating the frequency component of the transmitted signal interfering with the dividing circuit (82), the filter means (86) being coupled in the input path to the dividing circuit (82).

## Patentansprüche

1. Funksendeempfänger mit:
einer Sendeeinrichtung (6) zum Ausgeben eines Sendesignals beim Sprechen;
einer Frequenzmischeinrichtung (3) zum normalen Empfangen eines Empfangssignals (S1) und eines Lokaloszillationssignals (S3), um ein Zwischenfrequenzsignal (S2) auszugeben;
einer Empfangslokaloszillationseinrichtung (5) zum Erzeugen des Lokaloszillationssignals (S3), wobei die Empfangslokaloszillationseinrichtung eine Teilungsschaltung (82) zum Teilen des Lokaloszillationssignals und eine Phasenregelschleife (PLL) bildet;
einer Sendedetektionseinrichtung (7) zum Detektieren des Sendesignals, um ein Detektionssignal (S5) zu bilden, wobei die Sendedetektionseinrichtung mit dem Ausgang der Sendeeinrichtung gekoppelt ist;
einer Verstärkungseinrichtung (51) zum Verstärken des Lokaloszillationssignals (S3) bei Empfang des Detektionssignals (S5), wobei die Verstärkungseinrichtung (51) im Eingangsweg zur Teilungsschaltung (82) gekoppelt ist; und
einer Filtereinrichtung (86) zum Betrieb bei Empfang des Detektionssignals (S5) und zum Dämpfen der Frequenzkomponente des Sendesignals, die mit der Teilungsschaltung (82) interferiert, wobei die Filtereinrichtung (86) im Eingangsweg zur Teilungsschaltung (82) gekoppelt ist.

2. Funksendeempfänger nach Anspruch 1, wobei die Verstärkungseinrichtung aufweist:
eine Verstärkungsschaltung (51) die ihre Verstärkung in Übereinstimmung mit einem Quellenstrom ändert; und
eine Stromquellenschaltung (52), die den zur Verstärkungsschaltung geführten Quellenstrom bei Empfang des Detektionssignals (S5) erhöht.

3. Funksendeempfänger nach Anspruch 1, wobei die Filtereinrichtung (86) aufweist: ein Sperrfilter, das eine relativ geringe Impedanz für die Frequenz des Sendesignals zeigt, und einen Schalter, der bei Empfang des Detektionssignals (S5) arbeitet, um das Sperrfilter (86) zu aktivieren, wobei der Schalter zwischen dem Sperrfilter und Masse angeordnet ist.

4. Funksendeempfänger mit:
einer Sendeeinrichtung (6) zum Ausgeben eines Sendesignals beim Sprechen;
einer Frequenzmischeinrichtung (3) zum normalen Empfangen eines Empfangssignals (S1) und eines Lokaloszillationssignals (S3), um ein Zwischenfrequenzsignal (S2) auszugeben;
einer Empfangslokaloszillationseinrichtung (5) zum Erzeugen des Lokaloszillationssignals (S3), wobei die Empfangslokaloszillationseinrichtung eine Teilungsschaltung (82) zum Teilen des Lokaloszillationssignals aufweist und eine Phasenregelschleife (PLL) bildet;
einer Sendedetektionseinrichtung (7) zum Detektieren des Sendesignals, um ein Detektionssignal (S5) zu bilden, wobei die Sendedetektionseinrichtung mit dem Ausgang der Sendeeinrichtung gekoppelt ist; und
einer Verstärkungseinrichtung (51) zum Verstärken des Lokaloszillationssignals (S3) bei Empfang des Detektionssignals (S5), wobei die Verstärkungseinrichtung (51) im Eingangsweg zur Teilungsschaltung (82) gekoppelt ist.

5. Funksendeempfänger mit:
einer Sendeeinrichtung (6) zum Ausgeben eines Sendesignals beim Sprechen;
einer Frequenzmischeinrichtung (3) zum normalen Empfangen eines Empfangssignals (S1) und eines Lokaloszillationssignals (S3), um ein Zwischenfrequenzsignal (S2) auszugeben;
einer Empfangslokaloszillationseinrichtung (5) zum Erzeugen des Lokaloszillationssignals (S3), wobei die Empfangslokaloszillationseinrichtung eine Teilungsschaltung (82) zum Teilen des Lokaloszillationssignals aufweist und eine Phasenregelschleife (PLL) bildet;
einer Sendedetektionseinrichtung (7) zum Detektieren des Sendesignals, um ein Detektionssignal (S5) zu bilden, wobei die Sendedetektionseinrichtung mit dem Ausgang der Sendeeinrichtung gekoppelt ist; und
einer Filtereinrichtung (86) zum Betrieb bei Empfang des Detektionssignals (S5) und zum Dämpfen der Frequenzkomponente des Sendesignals, die mit der Teilungsschaltung (82) interferiert, wobei die Filtereinrichtung (86) im Eingangsweg zur Teilungsschaltung (82) gekoppelt ist.

## Revendications

1. Radio émetteur-récepteur comprenant :
- des moyens d'émission (6) pour sortir un signal émis pendant une conversation ;
- des moyens de mélange de fréquences (3) pour recevoir normalement un signal reçu (S1) et un signal d'oscillation locale (S3) afin de sortir un signal de fréquence intermédiaire (S2) ;
- des moyens d'oscillation locale de réception (5) pour produire le signal d'oscillation locale (S3), les moyens d'oscillation locale de réception incluant un circuit diviseur (82) pour diviser le signal d'oscillation locale et constituer une boucle à verrouillage de phase (PLL) ;
- des moyens de détection d'émission (7) pour détecter le signal émis afin de fournir un signal de détection (S5), les moyens de détection d'émission étant couplés à la sortie des moyens d'émission ;
- des moyens d'amplification (51) pour amplifier le signal d'oscillation locale (S3) lors de la réception du signal de détection (S5), les moyens d'amplification (51) étant couplés dans le chemin d'entrée au circuit diviseur (82) ; et
- des moyens de filtrage (86) pour fonctionner lors de la réception du signal de détection (S5) et pour atténuer la composante de fréquence du signal émis perturbant le circuit diviseur (82), les moyens de filtrage (86) étant couplés dans le chemin d'entrée au circuit diviseur (82).

2. Radio émetteur-récepteur selon la revendication 1, dans lequel les moyens d'amplification comprennent :
- un circuit amplificateur (51) qui change son gain conformément à un courant de source ; et
- un circuit source de courant (52) qui augmente le courant de source délivré au circuit amplificateur lors de la réception du signal de détection (S5).

3. Radio émetteur-récepteur selon la revendication 1, dans lequel les moyens de filtrage (86) comprennent un filtre de rejet qui présente une impédance relativement faible pour la fréquence du signal d'émission ; et un commutateur (53) qui opère, lors de la réception du signal de détection (S5), de manière à faire fonctionner le filtre de rejet (86), le commutateur étant disposé entre le filtre de rejet et la masse.

4. Radio émetteur-récepteur comprenant :
- des moyens d'émission (6) pour sortir un signal émis pendant une conversation ;
- des moyens de mélange de fréquences (3) pour recevoir normalement un signal reçu (S1) et un signal d'oscillation locale (S3) afin de sortir un signal de fréquence intermédiaire (S2) ;
- des moyens d'oscillation locale de réception (5) pour produire le signal d'oscillation locale (S3), les moyens d'oscillation locale de réception incluant un circuit diviseur (82) pour diviser le signal d'oscillation locale et constituer une boucle à verrouillage de phase (PLL) ;
- des moyens de détection d'émission (7) pour détecter le signal émis afin de fournir un signal de détection (S5), les moyens de détection d'émission étant couplés à la sortie des moyens d'émission ; et
- des moyens d'amplification (51) pour amplifier le signal d'oscillation locale (S3) lors de la réception du signal de détection (S5), les moyens d'amplification (51) étant couplés dans le chemin d'entrée au circuit diviseur (82).

5. Radio émetteur-récepteur comprenant :
- des moyens d'émission (6) pour sortir un signal émis pendant une conversation ;
- des moyens de mélange de fréquences (3) pour recevoir normalement un signal reçu (S1) et un signal d'oscillation locale (S3) afin de sortir un signal de fréquence intermédiaire (S2) ;
- des moyens d'oscillation locale de réception (5) pour produire le signal d'oscillation locale (S3), les moyens d'oscillation locale de réception incluant un circuit diviseur (82) pour diviser le signal d'oscillation locale et constituer une boucle à verrouillage de phase (PLL) ;
- des moyens de détection d'émission (7) pour détecter le signal émis afin de fournir un signal de détection (S5), les moyens de détection d'émission étant couplés à la sortie des moyens d'émission ; et
- des moyens de filtrage (86) pour fonctionner lors de la réception du signal de détection (S5) et pour atténuer la composante de fréquence du signal émis perturbant le circuit diviseur (82), les moyens de filtrage (86) étant couplés dans le chemin d'entrée au circuit diviseur (82).
